# FASCICULE DE BREVET EUROPEEN

(11) **EP 1 212 651 B1**
(45) Date de publication et mention de la délivrance du brevet: **21.05.2003**
(21) Numéro de dépôt: 00964300.8
(22) Date de dépôt: 15.09.2000
(51) Int. Cl.: G02C 5/00, G02C 7/00, G02C 11/00

(54) **DISPOSITIF DE CALES VISUELLES**
VORRICHTUNG FÜR GESICHTSREFERENZEN
SIGHT LOCKING DEVICE

(30) Priorité: 17.09.1999 FR 9911855
(43) Date de publication de la demande: 12.06.2002
(73) Titulaire: Jeannin, Hubert, 83190 Ollioules (FR)
(72) Inventeur: Jeannin, Hubert, 83190 Ollioules (FR)
(74) Mandataire: Marek, Pierre
(86) Numéro de dépôt international: FR0002568
(87) Numéro de publication internationale: WO01022151

(56) Documents cités:
- EP-A- 0 603 092
- WO-A-96/25685
- US-A- 5 161 196

## Description

La présente invention concerne un dispositif de cale visuelle, rapporté ou intégré aux objets mobiles, aux verres de lunettes, aux montures de lunettes ou autres supports, pour fournir aux utilisateurs, au moins un repère lié à la gravité, dans leur champ visuel périphérique et prévenir ainsi tout dérangement (perte de vigilance et nausées, mal des transports en général) lié, en particulier, aux perceptions divergentes de l'équilibre et de la vue.

La présente invention vise également les nombreuses applications de ce dispositif dans le domaine scientifique, médical, du confort, du loisir ou professionnel et notamment militaire.

Une différence de perception entre la vue et l'équilibre (l'oreille interne) apparaît lorsque l'individu est placé dans un environnement en mouvement sans qu'il perçoive visuellement ce mouvement, et inversement. En effet, l'oeil perçoit un environnement stable à l'intérieur d'un mobile, par exemple à l'intérieur d'une cabine de bateau en mouvement, alors que l'oreille interne, elle, perçoit des informations inverses. Elle ressent le mouvement du bateau. Cette contradiction ou différence de perception est à l'origine du mal des transports (mal de mer, mal de l'air, nausée en voiture, etc.) appelé également cinétose.

Plusieurs dispositifs anti-cinétose sont actuellement disponibles dans le commerce dont certains font l'objet de dépôts de Brevets. Dans la Demande de Brevet N° WO 96/25685, par exemple, il est proposé pour lutter contre la cinétose, de se munir de lunettes particulières en ce qu'elles comportent sur ou dans leurs verres, un horizon artificiel constitué par une ligne visible par l'utilisateur, maintenue en position horizontale permanente quels que soient les mouvements latéraux des lunettes ou de la tête de l'utilisateur. Cette Demande de Brevet mentionne également en tant qu'art antérieur notamment les documents US.-A-5.355.182, WO 91/00541, lesquels dévoilent des dispositifs plus ou moins complexes qui ont l'inconvénient majeur, de même que l'objet du document WO 96/25685, de présenter une ligne d'horizon artificielle dans le centre du champ visuel (lieu de la perception fine, de l'analyse de l'image) de l'individu. Cette ligne d'horizon artificielle gêne l'acuité visuelle de l'utilisateur. Cette gêne n'incite pas au port systématique de ces lunettes et de surcroît leur port à titre préventif. Cette gêne est supprimée dans le système décrit dans le document EP.-A-0.603.092 lequel permet l'affichage d'un horizon artificiel dans une zone dite de "vision périphérique" pour lutter contre les désorientations spatiales des pilotes. Ce dispositif complexe monté sur le casque des pilotes est destiné à des usages très spécifiques, de sorte qu'il ne peut être porté en permanence par tout public et engendre d'autres inconvénients qui s'ajoutent à ceux susmentionnés des dispositifs actuels.

Les dispositifs actuellement disponibles pour tout public, du fait de leur complexité, sont onéreux, fragiles, éventuellement lourds (présence de plusieurs verres ou de pistons au niveau de la monture, etc.) et inesthétiques. Ils supportent mal les importantes variations de température et de pression ainsi que les mauvais traitements des utilisateurs.

En outre, dans ces dispositifs, la mobilité de la ligne d'horizon artificielle présente dans le champ visuel central de l'individu, est obtenue uniquement par rotation axiale, seuls les mouvements de basculement latéraux de gauche et de droite (de roulis) de la tête ou du mobile sont traduits par une inclinaison plus ou moins importante de ladite ligne d'horizon artificielle à l'intérieur des lunettes sans que les mouvements antéro-postérieurs (de tangage) le soient, lesquels correspondent notamment aux basculements d'avant en arrière ou de bas en haut de la tête par exemple.

La présente invention a notamment pour but de remédier aux inconvénients susmentionnés des dispositifs anti-cinétoses actuels.

Selon l'invention, cet objectif est atteint grâce à un dispositif de cale visuelle selon la rev. 1 rapporté ou intégré à tout support devant être positionné dans le champ visuel périphérique de l'individu, remarquable en ce qu'il est constitué d'un tube ou tuyau ou de tout autre contenant de même principe refermé sur lui-même, imperméable, transparent ou translucide, présentant ou non une dérivation, dans lequel sont contenues au moins deux substances d'états et/ou de masses différents (par exemple, l'une étant sous forme liquide et l'autre sous forme gazeuse (eau teintée et air)), telles que les interfaces entre ces substances matérialisent des repères visibles.

Ces repères calent la vision de l'utilisateur en harmonie avec les niveaux de liquide de l'oreille interne. Le dispositif de cale visuelle est intégré ou fixé à tout support ou à un autre dispositif, de sorte qu'au moins un des repères soit positionné dans le champ visuel périphérique de l'un ou des deux yeux de l'utilisateur ou encore des objectifs d'appareils photographiques, de caméras, d'écrans d'ordinateur ou des systèmes optiques grossissants.

Ce positionnement est rendu possible par tout moyen connu en soi et notamment en intégrant ou en fixant ce dispositif à l'intérieur ou à l'extérieur des montures de lunettes (avec ou sans verre), aussi bien qu'à l'intérieur ou à l'extérieur d'au moins un des verres de lunettes, ou des masques de plongée par exemple, ou des objectifs d'appareils photographiques, de caméras ou des systèmes optiques grossissants, ou d'écrans divers.

Grâce à la localisation périphérique de repères ou cales du dispositif, par rapport au champ visuel central, l'individu n'est pas gêné dans sa perception de l'image centrale lorsqu'il utilise le dispositif.

Par ailleurs, il est rappelé à titre d'information complémentaire, le rôle du champs visuel périphérique et le mode de fonctionnement de l'oreille interne. D'une part, la vision périphérique est le lieu de l'environnement de l'image centrale (de l'image "volontaire"), la veille du champ visuel central ; d'autre part, le mode de repérage par niveaux de liquide dans la réalisation préférée est d'un fonctionnement fondamentalement comparable à celui de l'oreille interne ; ainsi, l'usage du champ visuel périphérique autant que le repérage par niveaux présente tous les avantages ergonomiques d'une adaptation aisée.

En effet, la variation de niveau des substances contenues dans le dispositif selon l'invention (et donc de leurs interfaces) suit le mouvement de la tête ou du mobile et correspond alors à la variation des niveaux du liquide de l'oreille interne. La perception de l'oeil est calée à tout moment par ces repères ou interfaces comme par l'oreille interne. Avec le positionnement de ce dispositif de cale autour ou sur le côté d'au moins un oeil, le différentiel de perception est atténué par la disposition au meilleur endroit du champ visuel, d'une information de même nature que celle de l'oreille interne.

Selon une conformation préférée du dispositif de l'invention, le tube fermé sur lui-même adopte la forme générale d'un anneau ou d'un tore inséré ou intégré dans un verre ou une monture avec ou sans verre, ou encore adjoint par collage ou "clipsage", par exemple.

Selon une exécution préférée du dispositif de l'invention, au moins une des deux substances qu'il contient est liquide, de sorte que son fonctionnement est fondamentalement comparable à celui de l'oreille interne.

Selon la réalisation la plus simple du dispositif selon l'invention, le tube est rempli d'un liquide de préférence teinté et renferme, comme deuxième substance, une bulle d'air, ou autre gaz, ou simplement une bille avec ou sans liquide. La bille ou la bulle bouge en fonction des mouvements du roulis.

Selon une autre réalisation du dispositif selon l'invention, diverses substances d'aspects différents, non miscibles entre elles, sont contenues dans le tube refermé sur lui-même. Les repères sont matérialisés par les interfaces visibles de ces substances.

L'ensemble du dispositif de cale visuelle peut être entièrement placé soit au-dessus d'un oeil ou des deux yeux, par exemple dans une visière de casquette, soit en dessous ou encore sur le côté de ces derniers, dans une oeillère par exemple. Une partie du dispositif peut être cachée laissant apparaître une seule cale, afin de bénéficier d'un repérage plus simple.

Selon une conformation avantageuse du dispositif de l'invention, le tube refermé sur lui-même en forme générale de tore creux présente, en plus, une dérivation communicante, disposée en formant un angle par rapport au plan initial (plan contenant l'unité de base de préférence en anneau du dispositif de cale visuelle selon l'invention). Cette dérivation permet de disposer d'un repérage dans la troisième dimension. En effet, la ou les interfaces présente(s) dans cette ramification ou dérivation bougent alors en complément selon les mouvements "antéro-postérieurs" ou tangage de la tête de l'individu ou du mobile.

Selon une autre réalisation du dispositif de l'invention, l'image tournante est constituée de la forme générale d'un anneau lesté tournant dans un autre.

Selon une autre réalisation du dispositif de l'invention, l'image mobile considérablement agrandie est constituée d'une ou de plusieurs colonnes reliées entre elles dans l'espace interne du mobile et contenant diverses substances dont les interfaces donnent des repères visuels.

Grâce à la simplicité de conception du dispositif de l'invention, son coût de fabrication est réduit. Il est accessible à tout public.

Les buts, caractéristiques et avantages ci-dessus, et d'autres encore ressortiront mieux de la description qui suit et des dessins annexés dans lesquels :
La figure 1 est une vue de face et en coupe, d'un premier exemple de concrétisation, du dispositif de cale visuelle selon l'invention, exécuté suivant un mode de réalisation très simple, le tracé en traits fins illustre l'emplacement de l'oeil par rapport à ce dispositif.
La figure 2 est une vue en coupe selon la ligne 2-2 de la figure 1.
La figure 3 est une vue de face et en coupe du dispositif de cale visuelle réalisé selon un deuxième mode d'exécution simplifiée.
La figure 4 est une vue de face et en coupe du dispositif de cale visuelle réalisé selon un troisième mode d'exécution simplifié.
La figure 5 est une vue de face et en coupe du dispositif de cale visuelle de l'invention exécuté selon un quatrième mode de réalisation simplifié.
La figure 6 est une vue de face et en coupe du dispositif de cale visuelle de l'invention exécuté suivant un cinquième mode de réalisation.
La figure 7 est une vue de face et en coupe du dispositif de cales visuelles exécuté suivant un sixième mode de réalisation de l'invention.
La figure 8 est une vue de face et en coupe, à caractère schématique, d'une paire de lunettes dont la monture comprend deux dispositifs de cales visuelles selon l'invention.
La figure 9 est une vue aplatie à caractère schématique et en coupe d'un dispositif de cale visuelle réalisé selon un premier développement de l'invention.
La figure 10 illustre une autre application intéressante de l'invention.
La figure 11 montre un autre exemple de développement avantageux de l'invention.

On se réfère auxdits dessins pour décrire des formes d'exécution avantageuses, quoique nullement limitatives, du dispositif de cales visuelles selon l'invention.

Le dispositif 1 selon l'invention comprend un tube 2 conçu dans tous matériaux convenables présentant les qualités de robustesse et, éventuellement, de souplesse adéquates, ces matériaux devant être transparents ou à tout le moins translucides, tube dont les extrémités sont raccordées entre elles pour former un circuit "intérieur" fermé. Ce tube 2 est, par exemple, exécuté en matière plastique rigide ou semi-rigide, ou en verre. Ce tube 2 refermé sur lui-même peut affecter des formes générales diverses, par exemple circulaire, éllipsoïdale, rectangulaire, etc. Les caractéristiques du ou des matériaux utilisés doivent lui permettre de contenir, selon les cas, des substances dans des états physiques divers, à savoir, liquide, solide ou gazeux. Au moins deux substances 3 et 5 d'état et/ou de masse différents sont renfermées dans le tube 2, refermé sur lui-même, ces substances étant non miscibles entre elles.

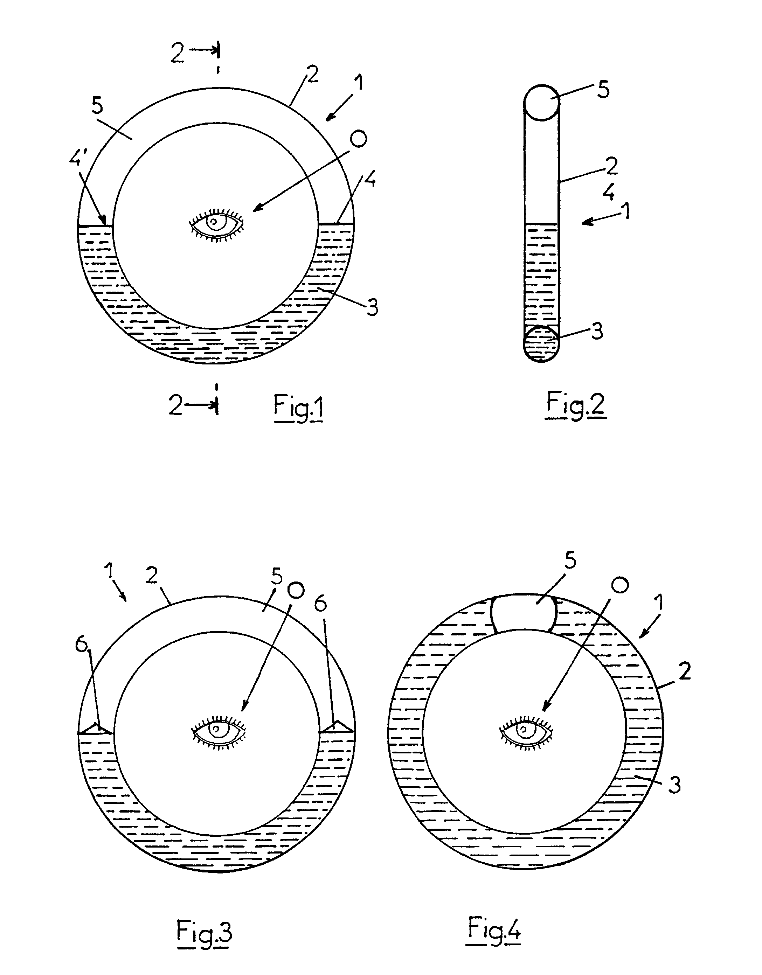

Selon l'exemple de réalisation simplifié montré aux figures 1 et 2, le tube circulaire est rempli, jusqu'à mi-hauteur, d'un liquide teinté 3 tel qu'eau colorée par exemple, tandis que le volume interne supérieur dudit tube est empli d'un gaz 5 tel que de l'air. Les interfaces 4, 4' des fluides gazeux 5 et liquide 3 sont nettement visibles. Ces deux interfaces 4, 4' jouent le rôle de cales visuelles qui, lorsque le dispositif est placé devant l'oeil, conservent une position stable et sont en phases avec le liquide de l'oreille interne et en répercutent les mouvements.

Le volume de gaz renfermé dans le tube torique peut être limité à une simple bulle (figure 4) qui reste située dans la partie supérieure du dispositif quels que soient les mouvements de ce dernier autour de son centre.

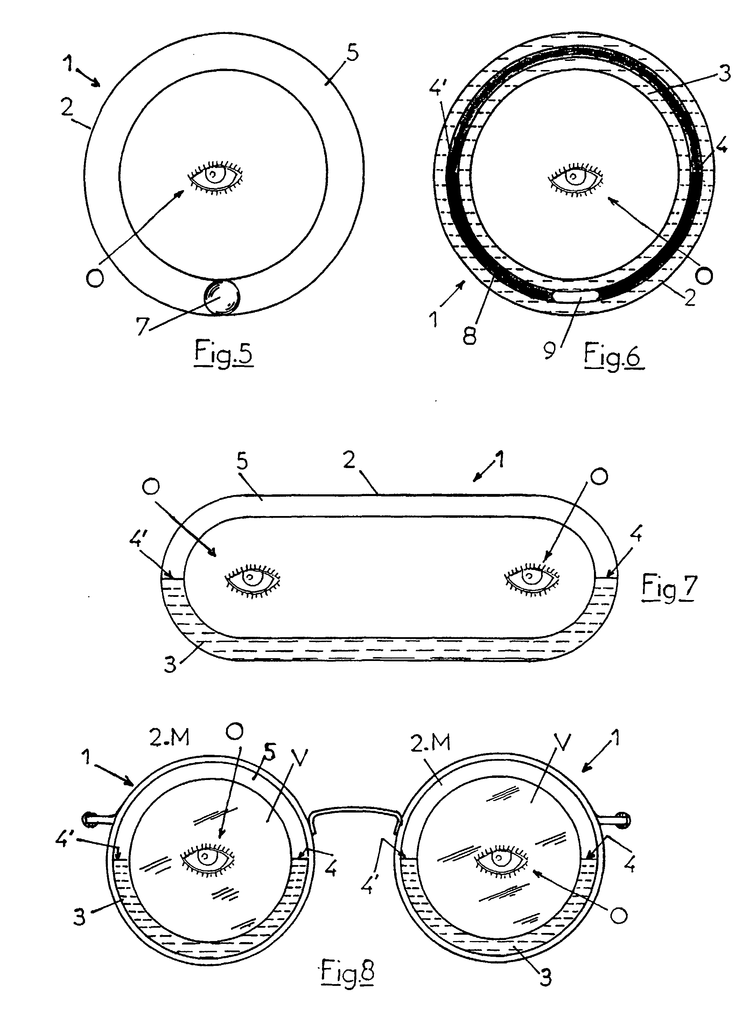

L'une des substances renfermée dans le tube torique peut être constituée par un corps solide, adoptant par exemple une forme sphérique 7 (bille) pouvant se déplacer dans le tube 2 ; un tel mode d'exécution est illustré à la figure 5.

Selon la masse relative desdites substances en présence et leur quantité, les repères 4, 4' sont positionnés dans le champ périphérique, soit à la partie supérieure du tube 2 refermé sur lui-même, tel qu'illustré à la figure 4, soit dans sa partie inférieure, tel qu'illustré à la figure 5, soit dans sa partie médiane tel qu'illustré aux figures 1, 2 et 3, toutes les positions intermédiaires étant également possibles. Par exemple, le liquide ou fluide 3 peut occuper environ la moitié de l'espace intérieur du tube 2, comme illustré aux figures 1 à 3, de sorte que ses interfaces 4, 4' avec l'air ou le liquide 3 se situent (lorsqu'il est placé autour de l'oeil de l'individu en position "stable"), à l'état de repos, à mi-hauteur de l'anneau 2, ou autrement dit, à l'horizontale de l'oeil dans le champ périphérique médian.

Pour permettre une meilleure vision des interfaces liquide/gaz ou liquide/liquide non miscibles, un petit objet ou repère flottant 6, 6' peut être placé au niveau de ces dernières (figure 3), ces petits repères flottant émergeant ou s'immergeant au niveau desdites interfaces.

Selon un autre exemple de mise en oeuvre de l'invention (non représenté), le tube 1 est rempli par deux liquides non miscibles entre eux (car de densité différente) et, de préférence, de couleur différente, par exemple, en proportion équivalente ou proche de l'équivalence. Les repères visuels pour la vision périphérique sont matérialisés par les deux zones frontières entre ces deux liquides. Selon les proportions des liquides contenus dans l'anneau leurs interfaces sont plus ou moins proches ou éloignées.

Selon un autre exemple de réalisation du dispositif de l'invention montré à la figure 6, un solide flottant constitué par un anneau circulaire ou par une portion d'anneau circulaire 8 muni d'un lest 9 est logé dans le tube torique 1 rempli de liquide 3. Dans le premier cas, l'anneau 8 présente deux portions différemment colorées et le lest 9 est disposé dans la partie médiane de l'une de ces portions, tandis que, dans le second cas, le lest 9 est disposé dans la partie médiane du corps flottant en forme de demi-tore 8, ou autre tronçon d'anneau.

Selon un autre mode d'exécution représenté à la figure 7, le tuyau 2 présente une forme sensiblement ellipsoïdale, et il est dimensionné de manière à pouvoir être placé dans le champ de vision périphérique des deux yeux d'une personne, en étant associé ou incorporé à tout support adéquat (montures, masques de plongée, etc.).

Le dispositif de cale visuelle selon l'invention, illustré aux figures 1 à 6, pour être fonctionnel, doit être positionné dans le champ périphérique de l'oeil O, ou des deux yeux, par tout moyen de maintien, par exemple par collage sur la monture d'une paire de lunettes (sur laquelle sont montés ou non des verres), en présentant au moins un repère 4, 4' ou 6, 6', dans le champs visuel périphérique de l'oeil. Ce dispositif en forme d'anneau a l'avantage de s'insérer facilement dans une monture de lunettes. Il peut être intégré à une monture, voire la constituer. Une paire de lunettes comportant un couple de dispositifs de cales visuelles 1 selon l'invention, est représentée de manière schématique à la figure 8. Selon ce mode d'exécution, les tubes toriques 2 des dispositifs constituent les montures M des verre V des lunettes qui, cependant, pourraient être dépourvues de verres optiques, comme indiqué précédemment, compte tenu de la fonction spécifique du dispositif de l'invention.

Un système plus complexe peut être élaboré (non représenté) avec deux dispositifs annulaires reliés entre eux à leur sommet et à leur base et auxquels des branches seraient rapportées pour constituer une monture de lunettes originale et attractive.

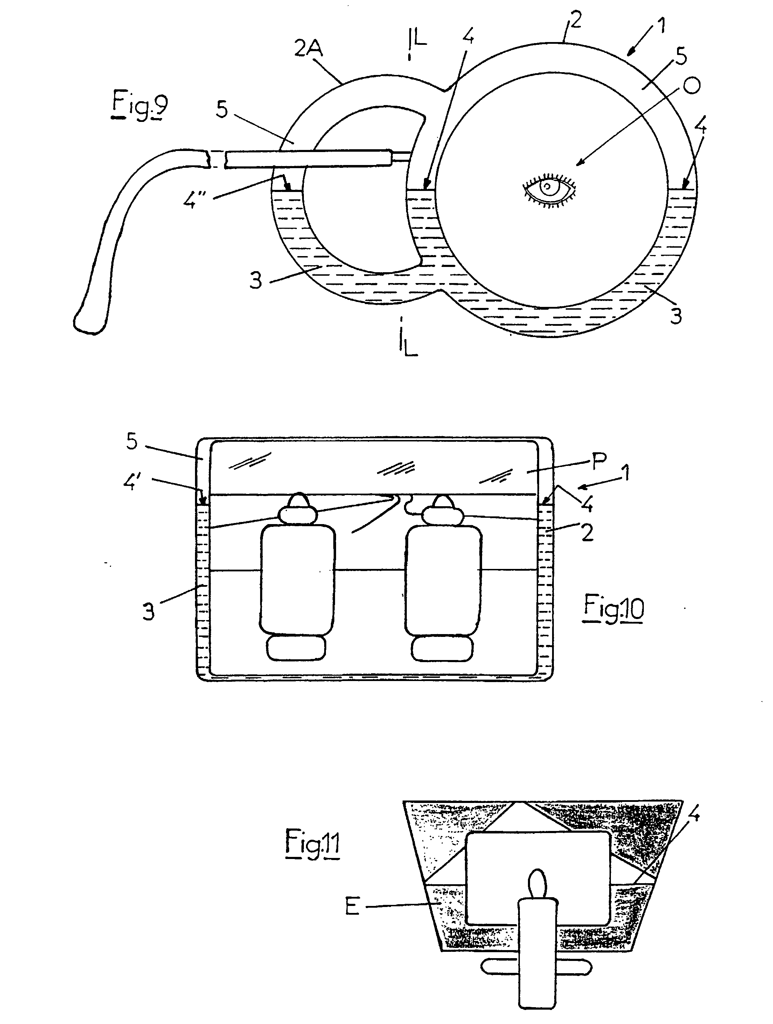

Selon une autre disposition caractéristique de l'invention illustrée à la figure 9, le tube 2 de forme générale arrondie ou autre, présente, en outre, latéralement, une dérivation 2A coudée communiquant avec l'espace intérieur de la partie restante du dispositif de cales visuelles, cette dérivation 2A formant ou pouvant former un angle droit ou un angle obtus proche de l'angle droit, avec l'anneau 2, lors de l'utilisation du dispositif. La substance fluide 3 incorporée dans le tube 2 et dans la dérivation 2A présente alors, avec la deuxième substance (dont l'état physique est soit identique et de masse/densité différente soit d'état physique différent), trois interfaces. Trois repères de vision 4, 4', 4" sont alors disponibles pour caler l'oeil de l'utilisateur. Deux repères 4, 4' sont visibles sur la partie frontale 2 du dispositif, tandis qu'un troisième repère 4" est visible sur la dérivation 2A laquelle communique avec la partie supérieure et avec la partie inférieure de ladite partie frontale.

Grâce à cette dérivation, le dispositif selon l'invention fournit, en position d'utilisation, un troisième repère 4" dans le champ visuel périphérique extrême de l'oeil et dont la variation de niveau retranscrit alors les mouvements antéro-postérieurs. Ces trois repères précisent et informent l'oeil sur le positionnement dans les trois dimensions des niveaux du liquide présent dans l'oreille interne. Cette information a donc l'avantage d'informer l'oeil quand "à la verticalité du sens antéro/postérieur".

Lorsque le dispositif est réalisé sous forme de lunettes, les dérivations 2A constituent les portions antérieures des branches de celles-ci, la ligne L-L figurant l'emplacement de l'angle que forment lesdites dérivations avec la partie frontale restante de la monture.

Comme indiqué précédemment, on comprend aisément que l'oeil de l'utilisateur muni de ce dispositif, cale sa vision grâce aux repères dudit dispositif lesquels bougent en harmonie avec le liquide de l'oreille interne. L'individu adapte sa vision à la perception de l'oreille interne et ne subit plus alors des désagréments dûs à la cinétose.

Les applications de ce dispositif selon l'invention sont nombreuses et multiples, par exemple dans les domaines militaire, médical, professionnel, du confort et du loisir. Le dispositif de cales visuelles peut être intégré ou rapporté à des lunettes, à une visière, à une casquette, à une oeillère, à un appareil d'optique, à un masque ou à une combinaison de plongée, à un appareil photographique, à une caméra, à un écran.

Il peut être disposé à proximité, sur ou autour d'objet embarqués comme, par exemple, un couvre-livre, une console, un écran d'ordinateur, ou encore disposé dans un espace occupé par les passagers de tous mobiles transportant une ou des personnes par voie terrestre, aérienne ou maritime, de façon à être visible par ces derniers dans les meilleures conditions possibles. A titre d'exemple, la figure 10 montre le dispositif de cales visuelles 1, selon l'invention, installé autour du bord supérieur et des côtés du pare-brise P d'un véhicule terrestre.

Selon un autre développement intéressant de l'invention, le dispositif de cales visuelles peut être traduit par une image virtuelle ou lumineuse de même type, projetée ou intégrée au verre de lunettes, monture, couvre-livre, console, écran, etc., obtenue au moyen d'une électronique comprenant par exemple un senseur (gyroscope ou toute autre source d'information ou capteur de la situation environnementale ou mobile) permettant de détecter les variations de position relatives à la gravitation. L'information, éventuellement après traitement par un ordinateur, est ensuite mise à la disposition de l'oeil ou des yeux grâce à un système d'imagerie ou d'éclairement, par exemple sous la forme d'un pourtour interne ou externe d'écran, ou sous la forme d'une animation dans un ou plusieurs écrans muraux ou non, ou colonnes, ou encore sous forme d'un système d'éclairage par exemple par faisceaux, ou encore de type colonne ou écran E d'ampoules ou de diodes électroluminescentes (figure 11).

## Revendications

1. Dispositif de cales visuelles anti-cinétose, **caractérisé en ce qu'**il est constitué d'un contenant tubulaire (2), imperméable, transparent ou translucide, refermé sur lui-même, dans lequel sont renfermée au moins deux substances (3 ; 5, 7, 8) d'états et/ou de masses différents, et des moyens pour disposer ledit contenant tubulaire dans le champ visuel périphérique d'un oeil ou des yeux d'un utilisateur dudit dispositif de façon que au moins une interface visible formée par lesdites substances matérialise des repères de vision latéraux (4, 4'), de sorte que l'utilisateur puisse percevoir visuellement, dans son environnement, une situation correspondant à celle que perçoivent les canaux semi-circulaires de l'oreille interne.

2. Dispositif de cales visuelles anti-cinétose selon la revendication 1, **caractérise en ce qu'**au moins l'une (3) des substances (3 ; 5, 7, 8) contenues dans le contenant tubulaire (2) refermé sur lui-même, est liquide.

3. Dispositif de cales visuelles anti-cinétose selon la revendication 2, **caractérisé en ce que** la deuxième substance (5) renfermée dans le contenant tubulaire (2) refermé sur lui-même est constituée par un fluide gazeux tel que, par exemple, de l'air.

4. Dispositif de cales visuelles anti-cinétose selon l'une des revendications 1 ou 2, **caractérisé en ce que** les substances renfermées dans le contenant tubulaire (2) refermé sur lui-même, sont constituées par des liquides non miscibles entre eux.

5. Dispositif de cales visuelles anti-cinétose selon l'une des revendications 3 ou 4, **caractérisé en ce que** le contenant tubulaire (2) refermé sur lui-même contient des volumes égaux de gaz (5) et de liquide (3) ou des liquides non miscibles entre eux.

6. Dispositif de cales visuelles anti-cinétose selon la revendication 3, **caractérisé en ce que** le volume de fluide gazeux renfermé dans le contenant tubulaire (2) refermé sur lui-même, est constitué par une simple bulle (5').

7. Dispositif de cales visuelles anti-cinétose selon l'une quelconque des revendications 1 à 6 **caractérisé en ce qu'**au moins l'une des substances contenues dans ledit contenant tubulaire (2) refermé sur lui-même, est colorée ou teintée.

8. Dispositif de cales visuelles anti-cinétose selon l'une quelconque des revendications 2 à 7, **caractérisé en ce que** la ou les interfaces des substances (3, 5) renfermées dans le contenant tubulaire (2) refermé sur lui-même, sont matérialisées par un repère flottant (6, 6') ou immergé.

9. Dispositif de cales visuelles anti-cinétose suivant la revendication 2, **caractérisé en ce que** la seconde des substances renfermées dans le contenant tubulaire (2) refermé sur lui-même, est constituée par un solide flottant constitué par un anneau circulaire ou par une portion d'anneau circulaire (8) muni d'un lest (9).

10. Dispositif de cales visuelles anti-cinétose selon la revendication 1, **caractérisé en ce que** l'une des substances renfermées dans le contenant tubulaire (2) renfermé sur lui-même, est constitué par une bille (7) de matière solide, pouvant se déplacer dans ledit contenant tubulaire (2).

11. Dispositif de cales visuelles anti-cinétose selon l'une quelconque des revendications 1 à 10, **caractérisé en ce que** le contenant tubulaire (2) refermé sur lui même adopte la forme générale d'un anneau incorporé ou adjoint, par exemple à un ou aux deux verres (V) de lunettes, ou aux montures (M) de lunettes, avec ou sans verre(s).

12. Dispositif de cales visuelles anti-cinétose selon l'une quelconque des revendications 1 à 11, **caractérisé en ce que** le contenant tubulaire (2) possède au moins une dérivation (2A) formant un coude avec la partie frontale (2) dudit dispositif de cales visuelles, cette dérivation communiquant avec l'espace intérieur de ladite partie frontale (2) de sorte que les substances (3; 5) peuvent circuler dans l'ensemble : partie frontale (2)-dérivation (2A), en créant un repère latéral supplémentaire (4").

13. Dispositif de cales visuelles anti-cinétose selon l'une quelconque des revendications 1 à 12, **caractérisé en ce qu'**au moins deux dispositifs selon ces revendications sont reliés et communiquent entre eux.

14. Dispositif de cales visuelles anti-cinétose selon l'une quelconque des revendications 1 à 13, applicable dans le domaine militaire, médical, professionnel, du confort ou des loisirs, **caractérisé en ce qu'**il est intégré ou rapporté à des lunettes, ou à une visière, ou à une casquette, ou à une oeillère, ou à un appareil d'optique, ou à un masque ou combinaison de plongée, ou à un appareil photographique, à une caméra ou à un écran.

15. Dispositif de cales visuelles anti-cinétose selon l'une quelconque des revendications 1 à 13, applicable dans le domaine militaire, médical, professionnel, du confort ou des loisirs, **caractérisé en ce qu'**il est disposé à proximité ou autour d'objets embarqués ou encore disposé dans un espace occupé par les passagers d'un véhicule, de sorte à être visible par ces derniers.

16. Dispositif de cales visuelles, **caractérisé en ce qu'**il est traduit par une image virtuelle ou lumineuse étant projetée ou intégrée sur les articles ou systèmes destinés à produire un effet anti-cinétose tels que verres de lunettes et montures de lunettes, cette image virtuelle étant obtenue à partir d'une électronique comprenant un senseur permettant de détecter les variations de position relative à la gravitation, un ordinateur pour le traitement des informations transmises par le senseur et un système d'imagerie ou d'éclairement contrôlé par ledit ordinateur et mise à la disposition de l'oeil de l'utilisateur desdits articles ou systèmes sous forme de repères de vision latéraux (4, 4') décrits dans les dispositifs de cales visuelles selon l'une quelconque des revendications 1 à 15, disposés dans le champ de vision de ce dernier, de sorte qu'il puisse percevoir visuellement, dans son environnement, une situation correspondant à celle que perçoivent les canaux semi-circulaires de l'oreille interne.

## Patentansprüche

1. Vorrichtung für Anti-Kinetose-Gesichtsreferenzen, **dadurch gekennzeichnet, dass** diese aus einem undurchlässigen, transparenten oder lichtdurchlässigen und abgeschlossenen rohrförmigen Behälter (2) besteht, in welchem mindestens zwei Substanzen (3, 5, 7, 8) mit unterschiedlichen Aggregatzustände und/oder Massen so eingeschlossen sind, dass mindestens eine sichtbare Grenzfläche seitliche Sichtbezugspunkte (4, 4') und geeignete Hilfsmittel des genannten rohrförmigen Behälters im peripheren Gesichtsfeld eines Auges oder beider Augen eines Benutzers der durch die genannten Substanzen gebildeten Vorrichtung erzeugt, mit denen der Benutzer in seiner Umgebung visuell eine Situation wahrnehmen kann, die der von den Bogengängen des Innenohres wahrgenommenen Situation entspricht.

2. Vorrichtung für Anti-Kinetose-Gesichtsreferenzen gemäß Anspruch 1, **dadurch gekennzeichnet, dass** mindestens eine (3) der im rohrförmigen Behälter (2) enthaltenen Substanzen (3, 5, 7, 8) flüssig ist.

3. Vorrichtung für Anti-Kinetose-Gesichtsreferenzen gemäß Anspruch 2, **dadurch gekennzeichnet, dass** die zweite Substanz (5). welche in dem abgeschlossenen rohrförmigen Behälter (2) eingeschlossen ist, aus einem gasförmigen Fluid wie zum Beispiel Luft besteht.

4. Vorrichtung für Anti-Kinetose-Gesichtsreferenzen gemäß einem der Ansprüche 1 oder 2, **dadurch gekennzeichnet, dass** die in dem abgeschlossenen rohrförmigen Behälter (2) eingeschlossenen Substanzen aus untereinander nicht mischbaren Flüssigkeiten bestehen.

5. Vorrichtung für Anti-Kinetose-Gesichtsreferenzen gemäß einem der Ansprüche 3 oder 4, **dadurch gekennzeichnet, dass** der abgeschlossene rohrförmige Behälter (2) gleiche Volumina an Gas (5) und Flüssigkeit (3) oder an untereinander nicht mischbaren Flüssigkeiten enthält.

6. Vorrichtung für Anti-Kinetose-Gesichtsreferenzen gemäß Anspruch 3, dadurch gekenn-zeichnet, dass das Volumen des gasförmigen Fluids, welches in dem abgeschlossenen rohrförmigen Behälter (2) eingeschlossenen ist, aus einer einfachen Blase (5') besteht.

7. Vorrichtung für Anti-Kinetose-Gesichtsreferenzen gemäß einem oder mehreren der Ansprüche 1 bis 6, **dadurch gekennzeichnet, dass** mindestens eine der in dem abgeschlossenen rohrförmigen Behälter (2) enthaltenen Substanzen gefärbt oder getönt ist.

8. Vorrichtung für Anti-Kinetose-Gesichtsreferenzen gemäß einem oder mehreren der Ansprüche 2 bis 7, **dadurch gekennzeichnet, dass** die Grenzfläche oder Grenzflächen der im abgeschlossenen rohrförmigen Behälter (2) enthaltenen Substanzen (3, 5) aus einer schwimmenden oder untergetauchten Markierung (6, 6') besteht oder bestehen.

9. Vorrichtung für Anti-Kinetose-Gesichtsreferenzen gemäß Anspruch 2, **dadurch gekennzeichnet, dass** die zweite der im abgeschlossenen rohrförmigen Behälter (2) enthaltenen Substanzen aus einem Festkörper besteht, der durch einen Kreisring oder einen Teil eines Kreisrings (8) gebildet wird, welcher mit einer Gegengewicht (9) versehen ist.

10. Vorrichtung für Anti-Kinetose-Gesichtsreferenzen gemäß Anspruch 1, dadurch gekenn-zeichnet, dass eine der im abgeschlossenen rohrförmigen Behälter (2) enthaltenen Substanzen eine aus einem Feststoff bestehende Kugel (7) ist, die ihre Lage im genannten rohrförmigen Behälter verändern kann.

11. Vorrichtung für Anti-Kinetose-Gesichtsreferenzen gemäß einem oder mehreren der Ansprüche 1 bis 10, **dadurch gekennzeichnet, dass** der abgeschlossene rohrförmige Behälter (2) die allgemeine Form eines Ringes aufweist, der beispielsweise in eines oder beide Gläser (V) einer Brille oder in Brillengestelle (M) mit Gläsern oder ohne Gläser eingearbeitet oder an diesen angebracht ist.

12. Vorrichtung für Anti-Kinetose-Gesichtsreferenzen gemäß einem oder mehreren der Ansprüche 1 bis 11, **dadurch gekennzeichnet, dass** der rohrförmige Behälter (2) mindestens eine Nebenleitung (2A) aufweist, die zusammen mit dem Vorderteil (2) der genannten Vorrichtung für Gesichtsreferenzen ein Kniestück bildet, wobei diese Nebenleitung mit dem Innenraum des genannten Vorderteils (2) so kommuniziert, dass die Substanzen (3, 5) in der aus dem Vorderteil (2) und der Nebenleitung (2A) gebildeten Anordnung zirkulieren können und dabei eine zusätzliche seitliche Markierung (4'') schaffen.

13. Vorrichtung für Anti-Kinetose-Gesichtsreferenzen gemäß einem oder mehreren der Ansprüche 1 bis 12, **dadurch gekennzeichnet, dass** mindestens zwei Vorrichtungen gemäß den genannten An-sprüchen miteinander verbunden sind und untereinander kommunizieren.

14. Vorrichtung für Anti-Kinetose-Gesichtsreferenzen gemäß einem oder mehreren der Ansprüche 1 bis 13, anwendbar für militärische, medizinische, berufliche, Komfort- oder Freizeitge-staltungszwecke, **dadurch gekennzeichnet, dass** sie in eine Brille, ein Helmvisier, eine Schirmmütze, eine medizinische Augenbadewanne, eine optische Apparatur, eine Tauchermaske, einen Fotoapparat, eine Filmkamera oder eine Projektionsfläche integriert ist oder in Verbindung mit derartigen Vorrichtungen benutzt wird.

15. Vorrichtung für Anti-Kinetose-Gesichtsreferenzen gemäß einem oder mehreren der Ansprüche 1 bis 13, anwendbar für militärische, medizinische, berufliche, Komfort- oder Freizeitge-staltungszwecke, **dadurch gekennzeichnet, dass** diese in der Nähe von Objekten in Luftfahrzeugen oder um solche Objekte herum angeordnet ist, oder dass sie im Fahrgastraum eines Fahrzeugs für die Fahrgäste sichtbar angeordnet ist.

16. Vorrichtung für Gesichtsreferenzen, **dadurch gekennzeichnet, dass** diese durch seitliche Sichtbezugspunkte (4, 4') repräsentiert wird, die in den Vorrichtungen für Gesichtsreferenzen gemäß einem oder mehreren der Ansprüche 1 bis 15 beschrieben werden, wobei ein virtuelles oder leuchtendes Abbild auf Artikel oder Systeme projiziert oder in diese integriert wird, die einer Kinetose entgegenwirken sollen, beispielsweise Brillengläser und Brillengestelle, wobei dieses virtuelle Abbild durch eine Elektronik erzeugt wird, die einen Sensor beinhaltet, der eine Erfassung von Positionsveränderungen relativ zur Schwerkraft gestattet, ferner einen Rechner für die Verarbeitung der vom Sensor übermittelten Informationen sowie ein Bildverarbeitungsoder Beleuchtungssystem, das vom genannten Rechner gesteuert wird und dem Auge des Benutzers der genannten Artikel oder Systeme das virtuelle Bild in Form von Bezugspunkten zur Verfügung stellt, die sich im Gesichtsfeld des Benutzers befinden, und zwar derart, dass dieser visuell in seiner Umgebung eine Situation wahrnehmen kann, die der von den Bogengängen des Innenohres wahrgenommenen Situation entspricht.

## Claims

1. Anti-kinetosis visual block device, **characterised in that** it consists of an impermeable, transparent or translucent tubular container (2) which is closed on itself, and contains at least two substances (3;5,7,8) with different states and/or masses, such that at least one visible interface formed by the said substances provides lateral vision markers (4,4') and means for disposing the said tubular container in the peripheral visual field of an eye or eyes of a user of the said device formed by the said substances, such that the user can perceive visually, in his environment, a situation which corresponds to that perceived by the semi-circular channels of the inner ear.

2. Anti-kinetosis visual block device according to claim 1, **characterised in that** at least one (3) of the substances (3;5,7,8) contained in the tubular container (2) which is closed on itself, is a liquid.

3. Anti-kinetosis visual block device according to claim 2, **characterised in that** the second substance (5) which is contained in the tubular container (2) which is closed on itself, consists of a gaseous fluid, such as air, for example.

4. Anti-kinetosis visual block device according to claim 1 or claim 2, **characterised in that** the substances which are contained in the tubular container (2) which is closed on itself, consist of liquids which are immiscible with one another.

5. Anti-kinetosis visual block device according to claim 3 or claim 4, **characterised in that** the tubular container (2) which is closed on itself contains equal volumes of gas (5) and liquid (3) or of liquids which are immiscible with one another.

6. Anti-kinetosis visual block device according to claim 3, **characterised in that** the volume of gaseous fluid which is contained in the tubular container (2) which is closed on itself, consists of a simple bubble (5').

7. Anti-kinetosis visual block device according to any one of claims 1 to 6, **characterised in that** at least one of the substances which is contained in the said tubular container (2) which is closed on itself, is coloured or dyed.

8. Anti-kinetosis visual block device according to any one of claims 2 to 7, **characterised in that** the interface(s) of the substances (3,5) which are contained in the tubular container (2) which is closed on itself, take the form of a floating or submerged marker (6,6').

9. Anti-kinetosis visual block device according to claim 2, **characterised in that** the second of the substances which is contained in the tubular container (2) which is closed on itself, consists of a floating solid constituted by an circular ring or by a portion of circular ring (8) provided with a ballast (9).

10. Anti-kinetosis visual block device according to claim 1, **characterised in that** one of the substances which is contained in the tubular container (2) which is closed on itself, consists of a ball (7) made of solid material, which can be displaced in the said tubular container (2).

11. Anti-kinetosis visual block device according to any one of claims 1 to 10, **characterised in that** the tubular container (2) which is closed on itself, is in the general form of a ring which is incorporated in, or attached to, one or two lens(es) (V) of spectacles or frames (M) of spectacles, without or without lens(es).

12. Anti-kinetosis visual block device according to any one of claims 1 to 11, **characterised in that** the tubular container (2) has at least one branch (2A) which forms an elbow relative to the front part (2) of the said visual wedge device, this branch communicating with the inner space of the said front part (2), such that the substances (3;5) can circulate in the assembly of the front part (2)-branch (2A), thus creating an additional lateral marker (4").

13. Anti-kinetosis visual block device according to any one of claims 1 to 12, **characterised in that** at least two devices according to these claims are connected and communicate with one another.

14. Anti-kinetosis visual block device according to any one of claims 1 to 13, applicable in the military, medical, professional, comfort or leisure fields, **characterised in that** it is integrated in, or added to, spectacles, or a visor, or a cap, or an eye shade, or an optical device, or a diving mask or suit, or a photographic device, a camera or a screen.

15. Anti-kinetosis visual block device according to any of claims 1 to 13, applicable in the military, medical, professional, comfort or leisure fields, **characterised in that** it is disposed in the vicinity of, or around, objects which are on board, or is disposed in a space occupied by the passengers of a vehicle, such as to be visible by the latter.

16. Visual block device, **characterised in that** it takes the form of a virtual or luminous image which is projected onto, or integrated in, articles or systems which are designed to produce an anti-kinetosis effect, such as lenses of spectacles and frames of spectacles, this virtual image being obtained from an electronic unit comprising a sensor which makes it possible to detect variations of position relative to gravitation, a computer for processing of the data transmitted by the sensor, an imagery or lighting system which is controlled by the said computer, and making available to the eye of the user the said articles or systems in the form of markers of lateral vision (4,4') which are described in the visual block devices according to any one of claims 1 to 15, and are disposed in the field of vision of the user, such that he can perceive visually, in his environment, a situation which corresponds to that perceived by the semi-circular channels of the inner ear.
